# EUROPEAN PATENT APPLICATION

(11) **EP 1 116 623 A2**
(43) Date of publication of application: **18.07.2001**
(21) Application number: 00128361.3
(22) Date of filing: 22.12.2000
(51) Int. Cl.: B60N 2/07

(54) **Vehicle seat slide device**

(30) Priority: 28.12.1999 JP 37473299
(71) Applicant: Ikeda Bussan Co., Ltd., Ayase-shi Kanagawa-ken (JP)
(72) Inventor: Yoshida, Tomonori, c/o Ikeda Bussan Co., Ltd., Ayase-shi, Kanagawa-ken (JP); Fujimoto, Ryo, c/o Ikeda Bussan Co., Ltd., Ayase-shi, Kanagawa-ken (JP)
(74) Representative: Grünecker, Kinkeldey, Stockmair & Schwanhäusser Anwaltssozietät

(57) **Abstract**

A vehicle seat slide device is provided for sliding movement of a vehicle seat in fore and aft positions of a vehicle body, and includes a lower guide rail which has a substantially upwardly opening C-channeled rail body, side walls, and upper guide walls that defines an elongated guide groove, and an upper slide rail which has a substantially downwardly opening C-channeled slide body having a vertical wall that extends upwardly through the guide groove, and upper slide walls. The rail body has a plurality of lock holes formed on the side walls. A latch element and an interlocking member laterally extend in the rail body to selectively engage the lock holes to lock the vehicle seat in a desired horizontally-adjusted position.

## Description

### BACKGROUND OF THE INVENTION

### 1. Field of the Invention

This invention relates to seat slide devices for use in automotive vehicles and, more particularly, to a vehicle seat slide device employing an elongated lower guide rail mounted on a floor panel in its longitudinal direction, and an upper slide rail firmly secured to a vehicle seat and slidably fitted in the lower guide rail for relative movement in the longitudinal direction, i.e., in fore and aft directions of the vehicle body.

### 2. Description of the Related Art

Virtually, all modern vehicles such as one-box cars or van-type vehicles are provided with seat slide devices which are mounted in a wide space behind a front seat for allowing one or plural rear seats to adjustably slide thereon in the fore and aft directions of the vehicle. Typically, the seat slide device includes an elongated lower guide rail mounted on a floor in a load carrying space of the vehicle in a longitudinal direction thereof, and an upper slide rail firmly fixed to the bottom of a vehicle seat and slidably fitted in the lower guide rail.

Commonly, a seat reclining mechanism has a base that is mounted on the lower guide rail. The seat reclining mechanism also has an arm on which a seat back is mounted. The seat back can be folded down forwardly and moveable in fore and aft positions. In some cases, a rear side of the seat back may be used as a table.

In such a vehicle, the lower guide rail has a first horizontal region in which a number of seats or rows of seats may be mounted, and a second horizontal region in which the seats may not be mounted. A lock mechanism has been proposed, which has interlocking components coupled to the upper slide rail to releasably maintain the seat in its locked position to prevent undesired movement of the seat to the second region.

Japanese Patent Application Laid-Open Publication No.H9-95163 discloses a vehicle seat device provided with a seat slide lock mechanism including a latch member and interlock member.

In this publication, the lock mechanism includes a slide lock device and an interlocking device, both of which are associated with the seat slide device. A lower guide rail has a bottom wall formed with a plurality of lock holes, and an interlocking hole. The slide lock has a slide lock clutch that engages selected ones of the lock holes, and a manual lever connected to the lock clutch through a wire. The interlocking device also has an interlocking clutch that is connected to the reclining mechanism coupled to the seat back through a wire and engages the interlocking hole. The lock clutch is urged in a locked position by a spring, and, likewise, the interlocking clutch is also urged in an interlocked position by a spring. The slide lock clutch is unlocked by operating the manual lever, and the interlocking clutch is unlocked when the seat is folded down forwardly, thereby allowing fore and aft movements of the seat with the upper slide rail.

### SUMMARY OF THE INVENTION

However, by the investigations of the present inventors, in the event that the conventional seat slide device is longitudinally formed in a manner as noted above, fabrication of various components is extremely troublesome, and undesired cranky or unsteady conditions owing to poor dimensional accuracy are caused in the seat slide device, resulting in an inherent difficulty in smooth sliding movement of the upper slide rail. Further, if the seat slide device is so fabricated as to have a greater strength that resists the load, then, the weight of the seat slide device adversely increases. Also, in the event that the seat slide device is mounted on to the floor panel of the vehicle body, dusts on the floor panel tends to enter the inside of the lower guide rail through the guide groove thereof, inducing a serious difficulty in sliding movement of the upper slide rail. Thus, it was difficult to provide an improved seat slide device that properly support the weight of a seat occupant with a simple structure and low manufacturing cost.

In such a seat slide device discussed above, also, since the slide lock mechanism and the interlocking mechanism has specific designs in which the slide lock holes and the interlocking holes are formed on the same plane on a bottom wall of the lower guide rail and in which the slide lock clutch and the interlocking clutch are vertically moved upward or downward into or from the slide lock holes and the interlocking holes, respectively, undesired lateral or vertical, cranky movement of the upper slide rail can not be prevented.

Accordingly, it is an object of the present invention to provide a vehicle seat slide device wherein lateral or vertical cranky movement of an upper rail relative to a lower guide rail is effectively prevented, wherein the lower guide rail has an increased strength to prevent undesired distortion of the upper slide rail, wherein the lower guide rail has a narrow guide groove to prevent the entry of dusts remaining on a floor panel into the lower guide rail, and wherein the upper slide rail is ensured not to disengage the lower guide rail during collisions of the vehicle or other reasons such as heavily loaded conditions.

It is another object of the present invention to provide a vehicle seat slide device which is simple in construction, easy to reduce the number of components while decreasing the fabricating steps, inexpensive to manufacture, easy to install the seat slide device on to the floor panel in an efficient manner for a short period of time, whereby the seat slide device provides a smooth sliding movement with a great reduction in sliding resistance thereby achieving an improved maneuverability.

To achieve the above and the objects, the present invention provides a vehicle seat slide device that includes an elongated lower guide rail that is firmly fixed to a floor of a vehicle body in a longitudinal direction thereof, and an upper slide rail firmly secured to a seat body and slidably guided by the lower guide rail.

The elongated lower guide rail has a substantially upwardly opening C-channeled rail body, a pair of side walls upwardly extending from lateral distal ends of the rail body, and a pair of upper guide walls inwardly extending from respective upper ends of the side walls to form an elongated guide groove. The upper slide rail has a substantially downwardly opening C-channeled slide body which is slidably accommodated in the lower guide rail, and a vertical wall standing upright from the center line of the slide body and extending upward through the elongated guide groove of the lower guide rail. The slide body has bifurcated upper slide walls extending from a lower end of the vertical wall and having their respective distal ends formed with downwardly extending lower side walls. The side walls of the rail body has a plurality of lock holes. The seat slide device also includes a plurality of lock members having lock pawls, respectively, that will be brought into locking engagement with selected ones of lock holes formed in the side walls of the rail body.

According to another aspect of the present invention, a vehicle seat slide device includes an elongated lower guide rail to be firmly secured to a floor of a vehicle body in a longitudinal direction thereof, and an upper slide rail firmly secured to a seat body and slidably guided by the lower guide rail.

The lower guide rail has a substantially upwardly opening C-channeled rail body, a pair of side walls upwardly extending from lateral distal ends of the rail body, and a pair of upper guide walls inwardly extending from respective upper ends of the side walls to provide an elongated guide groove. The upper slide rail has a substantially downwardly opening C-channeled slide body which is slidably accommodated in the lower guide rail, and a vertical wall standing upright from the center line of the slide body and extending upward through the elongated guide groove of the lower guide rail. The slide body has bifurcated upper slide walls outwardly extending from a lower end of the vertical wall and having its distal ends formed with downwardly extending lower side walls. One of the lower side walls has a plurality of lock holes, and the other one of the side walls of the rail body has an interlocking hole. The seat slide device also includes a laterally moveable latch member located in the lower guide rail to selectively engage selected ones of the lock holes, and an interlocking member having an interlocking pawl that is laterally moveable in another direction to releasably engage the interlocking hole.

According to another aspect of the present invention, a vehicle seat slide has an elongated lower guide rail adapted to be fixedly secured to a floor of a vehicle body in a longitudinal direction thereof, and an upper slide rail firmly fixed to a seat body and slidably guided by the lower guide rail in the longitudinal direction thereof.

The lower guide rail has a substantially upwardly opening C-channeled rail body, a pair of side walls upwardly extending from lateral distal ends of the rail body, and a pair of upper guide walls inwardly extending from respective upper ends of the side walls to provide an elongated guide groove. The upper slide rail has a substantially downwardly opening C-channeled slide body which is slidably accommodated in the lower guide rail, and a vertical wall standing upright from the center line of the slide body and extending upward through the guide groove. The slide body has bifurcated upper slide walls outwardly extending from a lower end of the vertical wall and having distal end formed with respective downwardly extending lower side walls. The lower guide rail also has its upper end formed with a finisher mounting segment that firmly retains finisher that shields the elongated guide groove. One of the side walls of the rail body has a plurality of lock holes, and the other one of the side walls of the rail body has an interlocking hole. The seat slide device also includes a latch member having segmented latch teeth that is laterally moveable in one direction to engage selected ones of the lock holes, and an interlocking member having an interlocking pawl that is laterally moveable in another direction to releasably engage the interlocking holes. The latch member and the interlocking member are aligned on a diagonal line extending between forward and rearward ends of the lower guide rail and the upper slider rail.

According to a further aspect of the present invention, a vehicle slide device includes an elongated lower guide rail adapted to be fixedly secured to a floor of a vehicle body in a longitudinal direction thereof, and an upper slide rail firmly secured to a seat body and slidably accommodated in the lower guide rail.

The lower guide rail includes a substantially upwardly opening C-channeled rail body, a pair of side walls upwardly extending from lateral distal ends of the rail body, and a pair of upper guide walls inwardly extending from upper ends of respective side walls to form an elongated guide groove. The upper slide rail includes a substantially downwardly opening C-channeled slide body slidably fitted in the lower guide rail, and a vertical wall standing upright from the center line of the slide body and extending upward through the elongated guide groove. The slide body has bifurcated upper slide walls outwardly extending from a lower end of the vertical wall. The bifurcated upper slide walls have their respective distal ends formed with downwardly extending lower side walls. The rail body has first hook segments formed at inner edges of the upper guide walls along the elongated guide groove, and second hook segments formed on the respective side walls of the rail body. The upper slide rail has first engaging segments formed on upper slide walls of the slide body to engage the first hook segments of the lower guide rail, and second engaging segments formed at a lower end of the lower side walls of the slide body to engage the corresponding second hook segments of the lower guide rail. The lower guide rail has its upper end formed with finisher mounting segments that firmly retain finishers to shield the elongated guide groove. One of the side walls of the rail body has a plurality of lock holes, and the other one of the side walls of the rail body has an interlocking hole. The seat slide device also includes a latch member having segmented latch teeth that are laterally moveable in one direction to engage selected ones of the lock holes, and an interlocking member having a pawl laterally moveable in another direction to releasably engage the interlocking hole. The latch member and the interlocking member are aligned on a diagonal line extending between forward and rearward ends of the lower guide rail and the upper slide rail.

Other and further features, advantages, and benefits of the invention will become more apparent from the following description taken in conjunction with the following drawings. It is to be understood that the foregoing general description and the following detailed description are exemplary and explanatory but are not to be restrictive of the invention. The accompanying drawings which are incorporated in and constitute a part of the invention, illustrate embodiments of the invention and, together with the description, serve to explain the principles of the invention in general terms. Like numerals refer to like parts throughout the disclosure.

### BRIEF DESCRIPTION OF THE DRAWINGS

Fig. 1 is a schematic cross sectional view of a preferred embodiment of a vehicle seat slide device according to the present invention;
Fig. 2A is an enlarged perspective view of an elongated lower guide rail of the vehicle seat slide device of Fig. 1;
Fig. 2B is across sectional view of the lower guide rail of Fig. 2A;
Fig. 3 is an exploded perspective view of the vehicle seat slide device shown in Fig. 1;
Fig. 4 is an enlarged plan view of the vehicle seat slide device shown in Fig. 3, certain parts being cut away for clarity;
Fig. 5 is a plan view of an upper slide rail of the vehicle seat slide device of Fig. 3;
Fig. 6 is a side view of the upper rail of the vehicle seat slide device of Fig. 5; and
Fig. 7 is a plan view of a modified form of a vehicle seat slide device shown in Fig. 4.

### DETAILED DESCRIPTION OF THE PREFERRED EMBODIMENTS

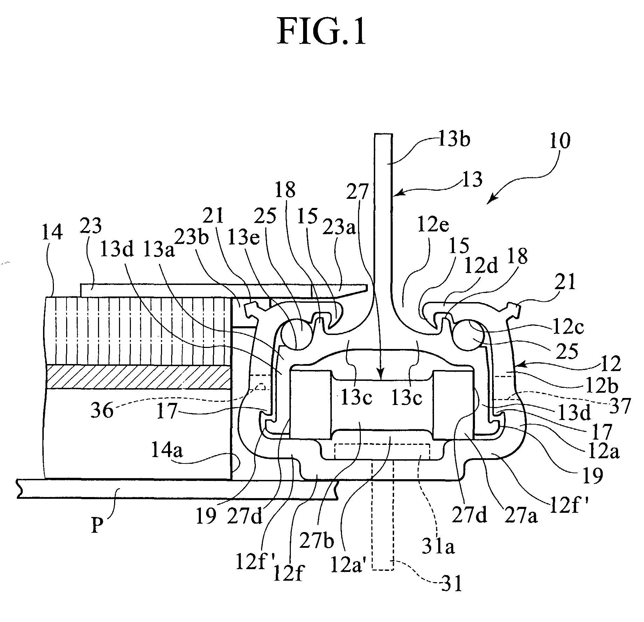

Referring now to Figs. 1 to 6, there is shown a preferred embodiment of a vehicle seat slide device according to the present invention. The vehicle seat slide device 10 is usually mounted onto a vehicle structure such as a floor panel P of a vehicle body to moveably support the vehicle seat in a longitudinal direction, i.e., fore and aft directions of the vehicle body.

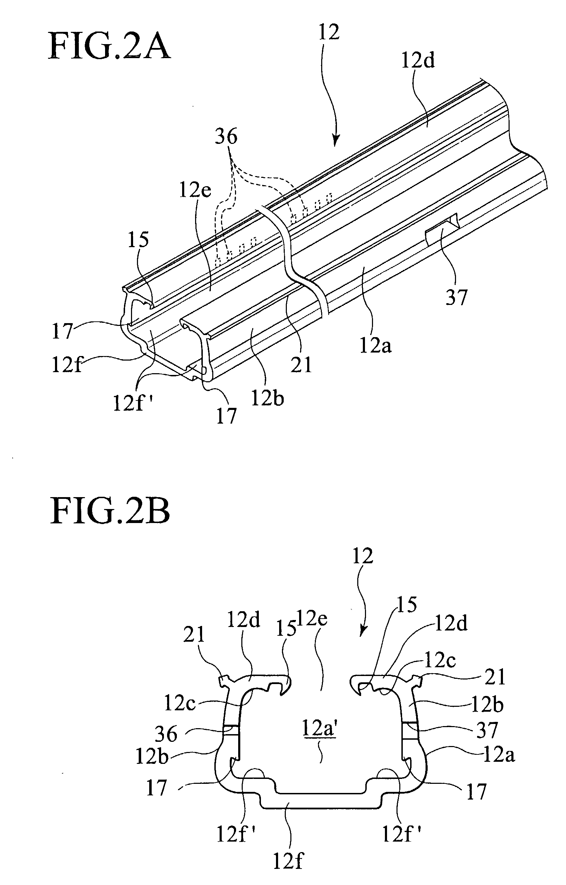

In Figs. 1 and 2, the vehicle seat slide device 10 includes an elongated lower guide rail 12 serving as a lower truck, and an upper slide rail 13 slidably fitted in the lower guide rail 12, which serves as a second truck for relative movement in fore and aft directions. Each of the lower and upper rails 12 and 13 may include a single elongated piece of extruded aluminum or magnesium, or a single elongated piece of hard plastic formed by injection molding. The elongated lower guide rail 12 is shown as being located in a cutout 14a of a floor carpet 14, but may be firmly secured to a suitable part(not shown)of the vehicle body by means of mounting brackets. On the contrary, the upper slide rail 13 is fixedly secured to a bottom wall of a seat body of a vehicle seat (not shown).

The elongated lower guide rail 12 includes a substantially upwardly opening C-channeled rail body 12a, a pair of vertical side walls 12b, 12b upwardly extending from lateral distal ends of the rail body 12a to provide an elongated cavity 12a', a pair of substantially rounded slider rest portions 12c, 12c formed on inner surfaces of respective upper ends of the side walls 12b, 12b, and a pair of upper guide walls 12d, 12d inwardly bent from the upper ends of the side walls 12b, 12b to define an elongated guide groove 12e.The rail body 12a has a horizontal center bottom wall 12f and a pair of planar stepped segments 12f', 12f' laterally extending outward from both distal ends of the bottom wall 12f to be contiguous with the side walls 12b, 12b. The stepped segments 12f', 12f' serves as trucks for supporting a roller which will be discussed below.

The upper slide rail 13 includes a substantially downwardly opening C-channeled slide body 13a that is slidably fitted in the lower guide rail 12. The slide body 13 includes a vertical wall 13b standing upright from the center line of the slide body 13a and upwardly extending through the elongated guide groove 12e of the lower guide rail 12, bifurcated upper slide walls 13c, 13c laterally extending from a lower end of the vertical wall 13b, and downwardly extending lower side walls 13d, 13d having their respective upper ends contiguous with lateral distal ends of the upper walls 13c, 13c. The slide body 13a also has a pair of substantially rounded slider rest shoulders 13e, 13e that face the corresponding slider rest portions 12c, 12c of the lower guide rail 12. A seat locking mechanism is located between the lower guide rail 12 and the upper slide rail 13 in a manner as will be discussed later.

As shown in Figs. 1, and 2A and 2B, the rail body 12a of the elongated lower guide rail 12 has their upper guide walls 12d, 12d formed at their inner distal ends with first hook segments 15, 15 that defines the elongated guide groove 12e. Second hook segments 17, 17 are formed on respective inner sides of the side walls 12b, 12b at locations near respective lower ends of the vertical side walls 12b, 12b. The first hook segments 15, 15 are defined by inwardly angulated portions formed at inner edges of respective upper guide walls 12d, 12d along the elongated guide groove 12e, respectively. On the contrary, the second hook segments 17, 17 are defined by downwardly extending edges formed near the lower ends of the respective vertical side walls 12b, 12b. In addition, a pair of finisher mounting segments 21, 21 are formed by outwardly and obliquely extending projections formed in the vicinities of junctions between the vertical side walls 12b, 12b and the upper guide walls 12d, 12d.These finisher mounting segments 21, 21 are coupled to finishers 23, 23 which are secured to a floor panel 14.The seat slide device 10 may be used as a usual seat position adjusting device mounted on to the floor panel 14 by means of mounting brackets.

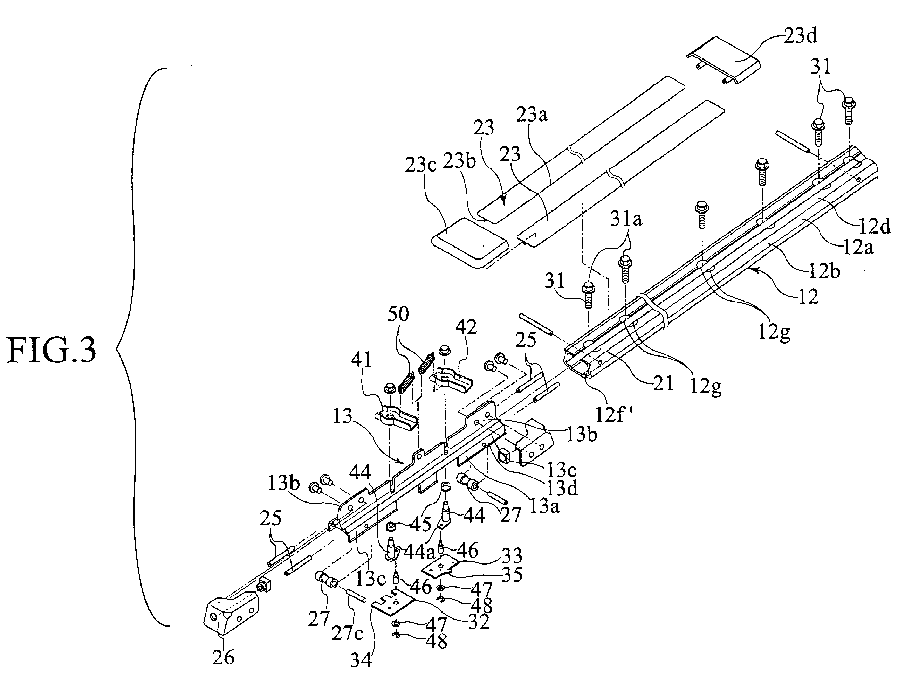

As shown in Figs. 1 and 3, the finishers 23, 23 are formed by plastic and include elongated soft lip portions 23a, 23a, respectively, that are formed at elongated inner edges of the finishers 23, 23, respectively. The finishers 23, 23 have their rear sides formed with engaging segments 23b, 23b, respectively. The engaging segments 23b, 23b serve to engage the respective finisher mounting segments 21, 21 of the lower guide rail 12. In this manner, the soft lip portions 23a, 23a of the respective finishers 23, 23 are held in sliding contact with both sides of the vertical wall 13b of the upper slide rail 13, thereby shielding the elongated guide groove 12e defined by the upper guide walls 12d, 12d of the lower guide rail 12 from dusts appearing on the floor panel 14.The finishers 23, 23 have front and rear ends coupled to end caps 23c, 23d, respectively, that are fixedly mounted on the structural portion of the vehicle body.

Turning now to Fig. 1, the upper slide rail 13 has a pair of first upwardly extending engaging segments 18, 18 formed on the respective upper surfaces of the upper slide walls 13c, 13c in the vicinities of the slider rest shoulders 13e, 13e of the slide body 13a to engage the corresponding first hook segments 15, 15 of the lower guide rail 12. The first engaging segments 18 include upwardly extending projections. Likewise, the slide body 13a also has second engaging segments 19, 19 formed at respective lower ends of the lower side walls 13d, 13d to engage the corresponding second hook segments 17, 17 of the lower guide rail 12.

The second engaging segments 19, 19 are defined by outwardly and slightly, upwardly angulated projections formed at respective lower ends of the vertical side walls 13d, 13d. The first engaging segments 18, 18 of the slide body 13a form parts of the rounded slider rest shoulders 13e, 13e formed near the upper lateral distal ends of the respective upper slide walls 13c, 13c.

Sliders 25, 25 are operatively disposed between the slider rest portions 12c, 12c of the lower guide rail 12 and the corresponding slider rest shoulders 13e, 13e of the upper slide rail 13. As seen in Figs. 1 and 3, a pair of rollers 27 are disposed at fore and aft positions between the planar stepped segments 12f', 12f' of the bottom wall 12f of the lower guide rail 12 and the upper slide walls 13c, 13c of the upper slide rail 13 for smooth sliding movement in fore and aft directions of the vehicle body. Each of the rollers 27 has a roller shaft 27c composed of a central shaft portion.

As shown in Fig. 1, each of the rollers 27 has a pair of large diameter shaft portions 27a and a central small diameter shaft portion 27b. The large diameter portions 27a of the roller 27 are placed in rolling contact with the planar stepped segments 12f', 12f ' of the bottom wall 12f of the rail body 12a, thereby providing a wide space between the bottom wall 12f of the rail body 12a and the central shaft portion 27b of the roller 27. With this arrangement, head portions 31a of fastener bolts 31 do not interfere with the roller 27 during movement thereof when the bolts 31 are fastened to the floor panel of the vehicle body.

As shown in Fig. 3, the roller 27 has a center bore through which a shaft 27c extends and has its both ends supported by the lower side walls 13d, 13d of the upper slide rail 13 for smooth rotation of the roller 27. As seen in Fig. 1, the roller 27 has its outermost end walls 27d, 27d held in sliding contact with or in proximity with the lower side walls 13d, 13d of the upper slide rail 13. Under this circumstance, even if the vertical wall 13b is subjected to a strong upward jerk, the lower side walls 13d, 13d of the upper slide rail 13 are prevented from being inwardly deformed.

As seen in Fig. 3, the lower guide rail 12 has a plurality of cutouts 12g formed at desired locations of the upper guide walls 12d, 12d to provide ease of access of the fastening bolts 31. The bolts 31 are secured to the floor panel of the vehicle body to fixedly support the lower guide rail 12 on the floor panel. The seat slide device 10 also includes front and rear mounting brackets 26 for mounting the front and rear ends of the lower guide rail 12 on to the floor panel of the vehicle body, with only front bracket 26 being shown in Fig. 3.

As best shown in Figs. 2A and 2B, one of the side walls 12b of the rail body 12a has a series of laterally extending latching apertures 36 formed at given locations along a length of the lower guide rail 12. On the other hand, the other one of the side walls 12b of the rail body 12a has a laterally extending interlocking hole 37.

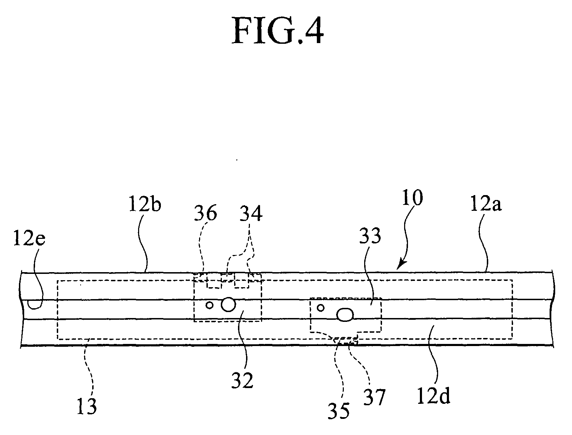

As shown in Figs. 3 to 6, the seat slide device 10 further includes the seat lock mechanism, which includes a latch plate32, an interlocking member 33 and actuating levers 41 and 42 for actuating the latch plate 32 and the interlocking member 33, respectively. The latch plate 32 and the interlocking member 33 are mounted at lower portions of the upper slide rail 13 in alignment on a diagonal line extending between the forward and rearward ends of the upper slide rail. The latch plate 32 has a lock pawl composed of segmented teeth 34 that is laterally moveable upward in Fig. 4 such that the segmented teeth 34 is brought into locking engagement with selected ones of the series of latching apertures 36 formed in one of the vertical side walls 12b, 12b of the rail body 12a. The interlocking member 33 has a laterally extending interlocking pawl 35 that is laterally moveable downward in Fig. 4 such that the interlocking pawl 35 is brought into interlocking engagement with the interlocking hole 37. The latch plate 32 is coupled to a manual lever 41 by means of a lock shaft 44 having an actuator segment 44a, together with a bush 45 as an upper intermediate member, a rivet lock 46,a wave washer 47 and an E-shape snap ring 48 each as a lower intermediate member. Likewise, the interlocking member 33 is coupled to an actuating lever 42 preferably by means of a lock shaft 44 having an actuator segment 44a, together with a bush 45 as an upper intermediate member, a rivet lock 46,a wave washer 47 and an E-shape snap ring 48 each as a lower intermediate member. The lever 42 is coupled through a wire (not shown) and an arm (not shown) to the seat back (not shown) of the vehicle seat such that, when the seat back is folded down forward, the lever 42 is actuated to release the interlocking member 33 from the interlocking hole 37. Springs 50 are connected to the levers 41, 42 to urge the levers 41, 42 toward their locking and interlocking positions, respectively. The seat slide device 10 has front and rear ends provided with front and rear mounding brackets 26, one of which is shown in Fig. 3.

During assembly of the seat slide device 10, the shafts 27c are initially inserted through the rollers 27 and their ends are coupled to the lower side walls 13d, 13d of the upper slide rail 13. The latch plate 32 and the interlocking member 33 are coupled to the levers 41, 42, respectively and fixed in place by the E-rings 48, 48. The upper slide rail 13 thus assembled is then inserted into the elongated cavity 12a' of the lower guide rail 12. The sliders 25 are fitted to spaces between the slider rest portions 12c, 12c of the lower guide rail 12 and the slider rest shoulders 13e, 13e of the upper slide rail 13. The front and rear mounting brackets 26 are then coupled to the front and rear ends of the lower guide rail 12 and fixed thereto by some suitable means. Finally, the finishers 23 are secured to the floor carpet 14 (see Fig. 2) by means of the end caps 23c, 23d such that the lips 23a of the finishers 23 are brought into sliding contact with the both sides of the vertical wall member 13b of the upper slide rail 13 to shield the elongated guide groove 12e thereof.

In actual practice, a pair of the slide devices 10 are laterally spaced and fixedly secured to the floor panel of the vehicle body in the longitudinal direction thereof. The seat body is fixedly secured to the upper guide rail 13 by some suitable bracket means (not shown).

In operation, if the seat back (not shown) is folded down forward and the lever 41 is actuated by the manual lever (not shown) of the seat, the latch plate 32 and the interlocking plate 33 are brought into an unlocked positions. In this instance, the seat back can be moved in the fore and aft positions of the vehicle body. When the seat is moved in the longitudinal direction to a desired position by the seat occupant, the lever 41 is released and the latch plate 32 and is brought into locking engagement with the latching apertures 36. When the seat back is returned to its upright position, the interlocking member 45 is caused to engage the interlocking hole 37 by the action of the spring 50. Thus, the seat can be releasably locked in a desired horizontally-adjusted position.

According to one particular feature of the present invention discussed above, the series of the lock holes and the interlocking holes are laterally formed in the side walls 12b, 12b of the rail body 12a of the lower guide rail 12, and the latch plate 32 and the interlocking member 33 are located under a lower portion of the upper slide rail 13 that is slidably fitted to the lower guide rail 12. Since, in this instance, the cranky play or movements of the upper slide rail 13 relative to the lower guide rail 12 is effectively prevented in a manner as noted above, the cranky movements of the latch plate 33 and the interlocking member 33 relative to the latching apertures 36 and the interlocking hole 37 of the side walls 12b, 12b, are also reliably prevented to obtain steady and reliable operation of the lock mechanism is obtained. With the specific structure of the vehicle seat slide device 10 discussed above, further, even when the upper slide rail 12 and the lower guide rail 13 are subjected to an excessively large peeling-off load in upward or downward directions during collisions, the first engaging segments 18, 18 of the upper slide rail 13 are brought into engagement with the first hook segments 15, 15 of the lower guide rail 12. In the event that the excessive separating load further acts on the seat slide device 10, the lower guide rail 12 and the upper slide rail 13 are partially deformed and the upper slide rail 13 is pulled upward. When this happens, the second engaging segments 19, 19 of the upper slide rail 13 are also brought into engagement with the second hook segments 17, 17 of the lower guide rail 12. In this manner, even if the upper slide rail 13 is subjected to an excessively peeling-off load, the upper slide rail 13 is prevented from being disengaged from the lower guide rail 12. Thus, the vehicle seat slide device 10 is ensured in primary and secondary steps to be maintained in its desired operative and safety condition in a simple and highly reliable manner during collisions or sudden stop of the running vehicle. The second hook segments 17, 17 of the lower guide rail 12 and the second engaging segments 19, 19 of the upper guide rail 13 may be dispensed with if desired.

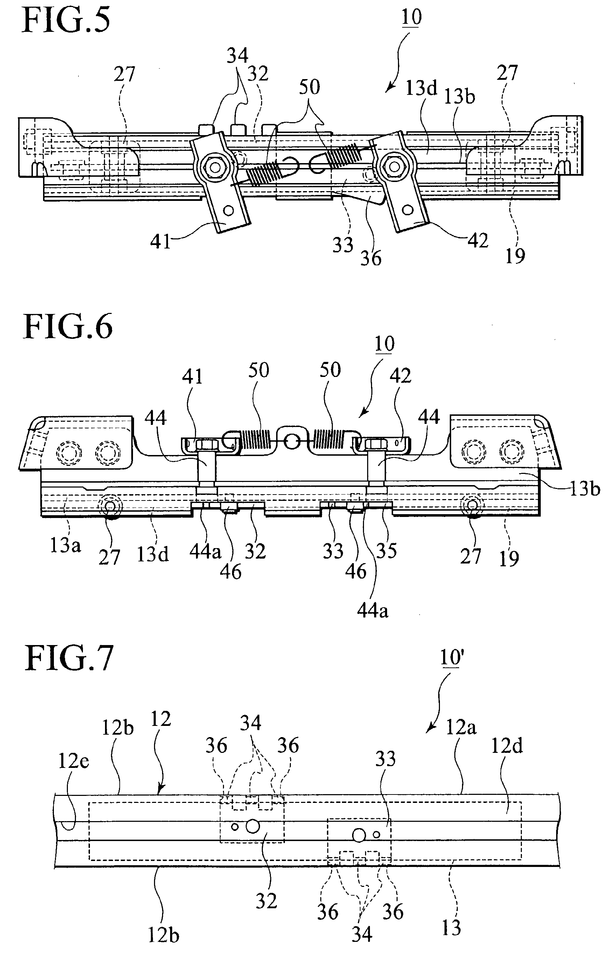

Fig. 7 shows a modified form of a vehicle seat slide device shown in Fig. 1. In Fig. 7, the lower guide rail 12 have first and second series of latching apertures 36 on both of the side walls 12b, 12b, and the interlocking member 33 is replaced with the latch plate 32. With this construction, the lock mechanism includes first and second latch plates 32, 32 that are laterally moveable in opposite directions to be brought into or out of lock condition. This structure is advantageous in that the cranky movements of the upper slide rail 13 is effectively prevented by selective engagement of one or both of the latch plates 32 with the latching apertures 36 of the side walls 12b, 12b.

With the preferred embodiment and modification of the vehicle seat slide device embodying the present invention, the present invention provides various advantages over the prior art vehicle seat slide device as will be discussed below.

In accordance with a first advantage of the present invention, a vehicle seat slide device includes an elongated lower guide rail having a substantially upwardly opening C-channeled rail body firmly secured to a floor of a vehicle body, a pair of upwardly extending side walls and a pair of inwardly extending upper guide walls formed at upper ends of the side walls to define an elongated guide groove, and an upper slide rail having a substantially downwardly opening C-channeled slide body having a vertical wall, laterally extending bifurcated upper slide walls and downwardly extending lower side walls formed at distal ends of the upper slide walls. The upper slide rail is slidably fitted to the lower guide rail. The side walls of the rail body have a plurality of lock holes, which form part of a slide lock mechanism that includes a plurality of lock elements having lock teeth that laterally protrude outward from lower end portions of the upper slide rail. With such a structure, upward or lateral cranky movements of the upper rail are prevented in a highly reliable fashion. Therefore, the lower guide rail can be formed to have a narrowed guide groove to minimize entry of dusts into the lower guide rail. Also, the lower guide rail can be fixedly secured to the floor of the vehicle body by fastener bolts through the cutouts formed in the guide groove. Further, the seat slide device is low in manufacturing cost, light in weight, low in sliding resistance and high in maneuverability while providing ease of fabrication of components and smooth and stable sliding movement of the upper rail relative to the lower guide ail.

In accordance with a second advantage of the present invention, a vehicle seat slide device includes an elongated lower guide rail having a substantially upwardly opening C-channeled rail body firmly secured to a floor of a vehicle body, a pair of upwardly extending side walls and a pair of inwardly extending upper guide walls formed at upper ends of the side walls to define an elongated guide groove, and an upper slide rail having a substantially downwardly opening C-channeled slide body having a vertical wall, laterally extending bifurcated upper slide walls and downwardly extending lower side walls formed at distal ends of the upper slide walls. The upper slide rail is slidably fitted to the lower guide rail. One of the side walls of the rail body has a plurality of lock holes, and the other one of the side walls of the rail body has an interlocking hole. A latch element having a latch pawl laterally extends from the slide body in one direction toward the lock holes to selectively engage the same, and an interlocking member having an interlocking pawl laterally extends from the slide body in another direction toward the interlocking hole to engage the same. With such as structure, upward or lateral cranky movements of the upper rail relative to the lower guide rail are prevented in a highly reliable fashion. Therefore, the lower guide rail can be formed to have a narrowed guide groove to minimize entry of dusts into the lower guide rail. Also, the lower guide rail can be fixedly secured to the floor of the vehicle body by fastener bolts through the cutouts formed in the guide groove. Further, the seat slide device is low in manufacturing cost, light in weight, low in sliding resistance and high in maneuverability while providing ease of fabrication of components and smooth and stable sliding movement of the upper rail relative to the lower guide ail.

In accordance with a third advantage of the present invention, a vehicle seat slide device includes an elongated lower guide rail having a substantially upwardly opening C-channeled rail body firmly secured to a floor of a vehicle body, a pair of upwardly extending side walls and a pair of inwardly extending upper guide walls formed at upper ends of the side walls to define an elongated guide groove, and an upper slide rail having a substantially downwardly opening C-channeled slide body having a vertical wall, laterally extending bifurcated upper slide walls and downwardly extending lower side walls formed at distal ends of the upper slide walls. The lower guide rail has upper ends formed with finisher mounting segments for fixedly retain a finisher to the floor of the vehicle body for shielding the elongated guide groove. One of the side walls of the rail body has a plurality of lock holes and the other one of the side walls has an interlocking hole. A latch element having a latch pawl laterally extends from the slide body in one direction toward the lock holes to selectively engage the same, and an interlocking member having an interlocking pawl laterally extends from the slide body in another direction toward the interlocking hole to engage the same. With such a structure, upward or lateral cranky movements of the upper rail are prevented in a highly reliable fashion. Therefore, the lower guide rail can be formed to have a narrowed guide groove to minimize entry of dusts into the lower guide rail. Also, the lower guide rail can be fixedly secured to the floor of the vehicle body by fastener bolts through the cutouts formed in the guide groove. Further, the seat slide device is low in manufacturing cost, light in weight, low in sliding resistance and high in maneuverability while providing ease of fabrication of components and smooth and stable sliding movement of the upper rail relative to the lower guide ail.

In accordance with a fourth advantage of the present invention, a vehicle seat slide device includes an elongated lower guide rail having a substantially upwardly opening C-channeled rail body firmly secured to a floor of a vehicle body, a pair of upwardly extending side walls and a pair of inwardly extending upper guide walls formed at upper ends of the side walls to define an elongated guide groove, and an upper slide rail having a substantially downwardly opening C-channeled slide body having a vertical wall, laterally extending bifurcated upper slide walls and downwardly extending lower side walls formed at distal ends of the upper slide walls. The lower guide rail has first hook segments formed at inner edges of the upper guide walls along the elongated guide groove, and second hook segments formed on side walls of the rail body. The upper slide rail has first engaging segments formed on the upper slide walls of the slide body to engage the first hook segments of the lower guide rail, and second engaging segments formed at lower ends of the lower side walls of the slide body to engage the second hook segments of the lower guide rail. The lower guide rail has upper ends formed with finisher mounting segments for fixedly retaining a finisher such that it shields the elongated guide rail. One of the side walls has a plurality of lock holes, and the other one of the side walls has an interlocking hole. A latch element having a latch pawl laterally protrudes from the slide body in one direction from the upper slide rail toward the lock holes to selectively engage the same, and an interlocking member having an interlocking pawl protrudes from the slide body in another direction from the upper side rail toward the interlocking hole to engage the interlocking holes. The latch element and the interlocking member are located on a diagonal line between forward and rearward ends of the upper slide rail. With such a structure, upward or lateral cranky movements of the upper rail are prevented in a highly reliable fashion. Therefore, the lower guide rail can be formed to have a narrowed guide groove to minimize entry of dusts into the lower guide rail. Also, the lower guide rail can be fixedly secured to the floor of the vehicle body by fastener bolts through the cutouts formed in the guide groove. In addition, even if the vehicle seat slide device is subjected to a peeling-off load, the upper slide rail is highly reliably retained by the lower guide rail owing to the hook segments of the rail body and the engaging segments of the slide body. Further, the seat slide device is low in manufacturing cost, light in weight, low in sliding resistance and high in maneuverability while providing ease of fabrication of components and smooth and stable sliding movement of the upper rail relative to the lower guide ail.

It will now be appreciated from the foregoing description that a vehicle seat slide device embodying the present invention has various advantages in that vertical or lateral cranky movements can be reliably prevented. Further, an elongated guide groove of a lower guide rail may have a narrow width to reliably prevent undesirable entry of dusts into the lower guide rail. In addition, the lower guide rail can be firmly fixed to a floor of a vehicle body by fastener bolts through the narrow guide groove. In the event that an upper rail is subjected to a peeling off load beyond a given value, the upper rail is firmly retained by the lower guide rail to prevent the upper slide rail from being peeled off from the lower guide rail. Further, the vehicle seat slide device is simple in structure, low in manufacturing cost, low in sliding resistance while providing ease of fabrication of components, decreased number of new components, quick and efficient installation works, smooth and stable sliding movement and improved maneuverability.

The entire contents of a Patent Application No. TOKUGANHEI 11-374732 with a filing date of Dec. 28, 1999 in Japan are hereby incorporated by reference.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

1. A vehicle seat slide device for a vehicle body, comprising:
an elongated lower guide rail adapted to be secured to a floor of a vehicle body in a longitudinal direction thereof and including a substantially upwardly opening C-shaped channeled rail body having a pair of laterally spaced upwardly extending side walls, and a pair of upper guide walls inwardly extending from upper ends of the side walls to define an elongated guide groove, the rail body having a plurality of lock holes formed in the side walls;
an upper slide rail adapted to be firmly fixed to a seat body and including a substantially downwardly opening C-channeled slide body fitted to the lower guide rail for sliding movement relative to the lower guide rail, the slide body having a vertical wall standing upright from a center line of the slide body and extending upward through the elongated guide groove, bifurcated upper slide walls extending outwardly from a lower end of the vertical wall and downwardly extending lower side walls formed at lateral distal ends of the upper slide walls; and
a plurality of lock members laterally protruding from the upper slide rail in a direction to selectively engage the lock holes of the side walls of the rail body.

2. A vehicle seat slide device according to claim 1, wherein the plurality of lock holes include a plurality of latching apertures, and the plurality of lock members include a latch element engaging the latching apertures.

3. A vehicle seat slide device according to claim 1, wherein the plurality of lock holes include an interlocking hole, and the plurality of lock members include an interlocking member engaging the interlocking hole.

4. A vehicle seat slide device according to claim 1, wherein the plurality of lock holes include a plurality of latching apertures formed on one of the side walls of the rail body and an interlocking hole formed on the other one of the side walls of the rail body, and the plurality of lock members include a latch element laterally protruding in one direction from the upper slide rail to selectively engage the latching apertures and an interlocking member laterally protruding in another direction from the upper slide rail to engage the interlocking hole.

5. A vehicle seat slide device according to claim 4, wherein the latch element and the interlocking member are mounted on the upper slide rail at locations aligned on a diagonal line between forward and rearward ends of the upper slide rail.

6. A vehicle seat slide device according to claim 1, in which the lower guide rail includes finisher mounting segments formed at upper ends of the rail body.

7. A vehicle seat slide device according to claim 6, further comprising a pair of finishers fixedly supported by the finisher mounting segments and held in sliding contact with the vertical wall of the upper slide rail.

8. A vehicle seat slide device according to claim 1 , in which the lower guide rail has first hook segments formed at inner edges of the upper guide walls of the rail body along the elongated guide groove, and the upper slide rail has first engaging segments that engage the first hook segments of the rail body when the upper slide rail is subjected to a peeling-off load.

9. A vehicle seat slide device according to claim 8, wherein the lower guide rail further has second hook segments formed on the side walls of the rail body, and the upper slide rail further has second engaging segments formed at lower ends of the lower side walls of the slide rail to engage the second hook segments when the upper rail is subjected to the peeling-off load.

10. A vehicle seat slide device according to claim 1, wherein the lower guide rail has a pair of slider rest portions formed at upper ends of the side walls of the rail body, and the upper slide rail has a pair of slider rest shoulders formed on the upper slide walls of the slide body.

11. A vehicle seat slide device according to claim 10, further comprising a pair of sliders operatively disposed between the slider rest portions of the lower guide rail and the slider rest shoulders of the upper slide walls.

12. A vehicle seat slide device according to claim 1, further comprising at least one roller disposed between the rail body of the lower guide rail and the upper slide walls of the upper slide rail.

13. A vehicle seat slide device according to claim 12, wherein the roller has extreme ends held in contact with the lower side walls of the upper slide rail.

14. A vehicle seat side device according to claim 12, wherein the roller has extreme ends placed in close proximity with the lower side walls of the upper slide rail.
